(19) Europäisches Patentamt / European Patent Office / Office européen des brevets

(11) **EP 4 525 172 A1**

(12) **EUROPEAN PATENT APPLICATION**
published in accordance with Art. 153(4) EPC

(43) Date of publication:
**19.03.2025 Bulletin 2025/12**

(21) Application number: **23803013.4**

(22) Date of filing: **11.05.2023**

(51) International Patent Classification (IPC):
**H01M 50/342** (2021.01)   **H01M 50/249** (2021.01)

(52) Cooperative Patent Classification (CPC):
Y02E 60/10

(86) International application number:
**PCT/CN2023/093643**

(87) International publication number:
**WO 2023/217244 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2022 CN 202210512534**

(71) Applicant: **BYD Company Limited**
**Shenzhen, Guangdong 518118 (CN)**

(72) Inventors:
• **SUN, Huajun**
  **Shenzhen, Guangdong 518118 (CN)**

• **WANG, Xinyue**
  **Shenzhen, Guangdong 518118 (CN)**
• **YUAN, Wansong**
  **Shenzhen, Guangdong 518118 (CN)**
• **ZHU, Yan**
  **Shenzhen, Guangdong 518118 (CN)**
• **DUAN, Pingan**
  **Shenzhen, Guangdong 518118 (CN)**

(74) Representative: **Taor, Simon Edward William et al**
**Venner Shipley LLP**
**200 Aldersgate**
**London EC1A 4HD (GB)**

(54) **BATTERY, BATTERY MODULE, BATTERY PACK AND VEHICLE**

(57)  A vehicle, having a battery pack. The battery pack comprises a battery or a battery module. The battery comprises a battery shell and an explosion-proof valve. The explosion-proof valve is arranged on the battery shell. The volume of the battery is V, and the unit of V is $mm^3$. The explosion-proof valve is provided with a notch groove, and the explosion-proof valve has an opening region. In a depth direction of the notch groove, an outer edge of the orthographic projection of the opening region is a predetermined opening boundary, the area of the orthographic projection of the opening region is S, and the unit of S is $mm^2$. S and V satisfy $0.3mm^{-1} \leq (5000 \times S)/V \leq 6mm^{-1}$.

FIG. 1

EP 4 525 172 A1

**Description**

**CROSS-REFERENCE TO RELATED APPLICATIONS**

The present disclosure claims priority to Chinese Patent Application No. "202210512534.7" filed by BYD Company Limited on May 12, 2022 and entitled "Battery, battery module, battery pack and vehicle", which is incorporated herein by reference in its entirety.

**FIELD**

The present disclosure relates to the technical field of batteries, and specifically to a battery, a battery module, a battery pack, and a vehicle.

**BACKGROUND**

In related art, an explosion-proof valve of a battery (such as a lithium-ion battery) is designed so that when the battery is used improperly and a gas pressure inside the battery increases, the explosion-proof valve can be opened in time to relieve the pressure, thereby protecting the battery against fire, explosion and other safety problems. However, in practical use, there are problems such as fire, explosion and other safety accidents caused by the untimely or insufficient pressure relieving rate of the battery.

**SUMMARY**

The present disclosure aims to solve at least one of the technical problems in the related art. To this end, an object of the present disclosure is to provide a battery with improved safety during use.

Another object of the present disclosure is to provide a battery module including the battery.

Another object of the present disclosure is to provide a battery pack including the battery or the battery module.

Another object of the present disclosure is to provide a vehicle including the battery or the battery pack.

A battery according to an embodiment in a first aspect of the present disclosure includes a battery shell and an explosion-proof valve. The explosion-proof valve is arranged on the battery shell. The battery has a volume of V, in $mm^3$. The explosion-proof valve is provided with a scored groove, and the explosion-proof valve has an open-up region. In a depth direction of the scored groove, an outer edge of an orthographic projection of the open-up region is a predetermined open-up boundary, and an area of the orthographic projection of the open-up region is S, in $mm^2$, where S and V meet 0.3 $mm^{-1} \leq (5000 \times S)/V$.

According to the explosion-proof valve in accordance with the embodiment of the present disclosure, by controlling a ratio of the area S of the open-up region to the volume V of the battery, a pressure relief rate of the battery can be effectively improved, and a pressure inside the battery can be released timely and quickly, thus improving the protection for the battery. Additionally, the explosion-proof valve has a high structural strength, which can ensure the safe use of the battery.

According to some exemplary embodiments of the present disclosure, S and V meet $(5000 \times S)/V < 6$ $mm^{-1}$.

According to some exemplary embodiments of the present disclosure, when a positive electrode material of the battery is a compound with an olivine-type structure, S and V further meet: 0.3 $mm^{-1} \leq 5000 \times S/V \leq 5$ $mm^{-1}$; and when the positive electrode material of the battery contains a layered compound, S and V further meet: 0.5 $mm^{-1} \leq 5000 \times S/V \leq 6$ $mm^{-1}$.

According to some exemplary embodiments of the present disclosure, S meets: 80 $mm^2 \leq S \leq 1600$ $mm^2$.

According to some exemplary embodiments of the present disclosure, V meets: 40000 $mm^3 \leq V \leq 3500000$ $mm^3$.

According to some exemplary embodiments of the present disclosure, the scored groove includes two oppositely arranged first arc segments, a first straight-line segment and two second straight-line segments arranged spaced apart. The first straight-line segment is arranged parallel to the second straight-line segments, two ends of the first straight-line segment are respectively connected to the two first arc segments, and each second straight-line segment is connected to a corresponding first arc segment. In the depth direction of the scored groove, two free ends of an outer edge of an orthogonal projection of the scored groove are connected to form a connecting line, and the connecting line and the outer edge of the orthogonal projection of the scored groove jointly form a predetermined open-up boundary.

According to some exemplary embodiments of the present disclosure, a first reinforcing groove is arranged on the open-up region. The first reinforcing groove includes two fourth arc segments. The two fourth arc segments are symmetrically arranged along the width direction of the explosion-proof valve, and the vertexes of the two fourth arc segments coincide. Two ends of one fourth arc segment extend to the second straight-line segment, and two ends of the other fourth arc segment respectively extend to the first straight-line segment.

According to some exemplary embodiments of the present disclosure, in the depth direction of the scored groove, the depth of the first reinforcing groove is smaller than the depth of the scored groove.

According to some exemplary embodiments of the present disclosure, the scored groove includes two oppositely arranged second arc segments and two parallelly arranged third straight-line segments. Two ends of each third straight segment are respectively connected to the two second arc segments, and the two third straight segments and the two second arc segments form a closed loop structure. In the depth direction of the scored groove, the outer edge of the orthogonal projection of the scored groove form the predetermined open-up boundary.

According to some exemplary embodiments of the present disclosure, a second reinforcing groove is arranged on the open-up region. The second reinforcing groove includes two eighth straight-line segments and one ninth straight-line segment. One end of each of the two eighth straight-line segments is connected to the ninth straight-line segment, an included angle is formed between the two eighth straight-line segments, the other ends of the two eighth straight-line segments extend to the two third straight-line segments respectively, and the other end of the ninth straight-line segment is connected to the second arc segment.

According to some exemplary embodiments of the present disclosure, the scored groove includes a fourth straight-line segment and four fifth straight-line segments. Two ends of the fourth straight-line segment are respectively connected to two fifth straight-line segments arranged at a preset included angle. In the depth direction of the scored groove, an arc-shaped segment is defined between free ends of orthographic projections of the two fifth straight-line segments located at the same end of the fourth straight-line segment. The arc-shaped segment has a vertex of the preset included angle as a center of a circle. a sixth straight-line segment is defined between free ends of orthographic projections of the two fifth straight-line segments located at the same side of the fourth straight-line segment. The two arc-shaped segments and the two sixth straight-line segments jointly form the predetermined open-up boundary.

According to some exemplary embodiments of the present disclosure, the explosion-proof valve includes a connecting segment, a supporting segment and a buffering segment. The connecting segment is connected to an outer peripheral side of the supporting segment, and the supporting segment and the connecting segment are arranged spaced apart along the thickness direction of the supporting segment. The buffering segment is connected between the connecting segment and the supporting segment, and the open-up region is arranged on the supporting segment.

According to some exemplary embodiments of the present disclosure, a recess is formed on the explosion-proof valve, and the scored groove is formed on a bottom wall of the recess.

According to some exemplary embodiments of the present disclosure, in the depth direction of the scored groove, an outer edge of an orthographic projection of the recess has an overlapped area with the outer edge of the orthographic projection of the scored groove.

According to some exemplary embodiments of the present disclosure, the explosion-proof valve has an oval shape or a racetrack-like shape.

According to some exemplary embodiments of the present disclosure, the explosion-proof valve has a flat sheet-like structure.

According to some exemplary embodiments of the present disclosure, an energy density of the battery is ED, where ED meets 200wh/kg≤ED≤280wh/kg.

A battery module according to an embodiment in a second aspect of the present disclosure includes the battery according to the embodiment in the first aspect of the present disclosure.

A battery pack according to an embodiment in a third aspect of the present disclosure includes the battery according to the embodiment in the first aspect of the present disclosure or the battery module according to the embodiment in the second aspect of the present disclosure.

A vehicle according to an embodiment in a fourth aspect of the present disclosure includes the battery according to the embodiment in the first aspect, or includes the battery pack according to the embodiment in the third aspect of the present disclosure.

Additional aspects and advantages of the present disclosure will be partly given in the following description, some of which will become apparent from the following description, or may be learned from practices of the present disclosure.

## BRIEF DESCRIPTION OF THE DRAWINGS

The above and/or other additional aspects and advantages of the present disclosure will become apparent and comprehensible from the description of embodiments in connection with accompanying drawings, in which:

FIG. 1 is a schematic view showing a battery according to an embodiment of the present disclosure;
FIG. 2 is a schematic cross-sectional view of an explosion-proof valve according to an embodiment of the present disclosure;
FIG. 3 is a schematic view showing an explosion-proof valve according to an embodiment of the present disclosure;
FIG. 4 is a schematic view showing an explosion-proof valve according to another embodiment of the present disclosure;

FIG. 5 is a schematic view showing an explosion-proof valve according to another embodiment of the present disclosure;

FIG. 6 is a schematic view showing an explosion-proof valve according to another embodiment of the present disclosure;

FIG. 7 schematically compares the pressure relief rates of batteries in Comparative Embodiment 1 and Embodiments 1-3 according to the present disclosure;

FIG. 8 schematically compares the pressure relief rates of batteries in Comparative Embodiment 1 and Embodiments 4-6 according to the present disclosure;

FIG. 9 schematically compares the pressure relief rates of batteries in Comparative Embodiment 2 and Embodiments 7-9 according to the present disclosure;

FIG. 10 schematically compares the pressure relief rates of batteries in Comparative Embodiment 2 and Embodiments 10-12 according to the present disclosure;

FIG. 11 is a schematic view of an explosion-proof valve with a flat sheet-like structure according to an embodiment of the present disclosure;

FIG. 12 is a schematic cross-sectional view of an explosion-proof valve with a flat sheet-like structure according to an embodiment of the present disclosure;

FIG. 13 is a schematic view showing a vehicle according to the present disclosure;

FIG. 14 is a schematic view showing a vehicle according to another embodiment of the present disclosure; and

FIG. 15 is a schematic view showing a vehicle according to another embodiment of the present disclosure.

List of reference numerals:

100 battery;

10 battery shell;

20 explosion-proof valve; 21 connecting segment; 22 supporting segment; 23 buffering segment; 221 recess; 24 open-up region; 25 scored groove; 251 first arc segment; 252 first straight-line segment; 253 second straight-line segment; 254 second arc segments; 255 third straight-line segment; 256 fourth straight-line segment; 257 fifth straight-line segment; 258 sixth straight-line segment; 259 arc-shaped segment; 260 fourth arc segment; 261 eighth straight-line segment; 262 ninth straight-line segment; 263 connecting line;

27 seventh straight-line segment; 28 third arc segment; 29 first reinforcing groove; 290 second reinforcing groove; 200 battery module; 300 battery pack; 400 vehicle.

## DETAILED DESCRIPTION

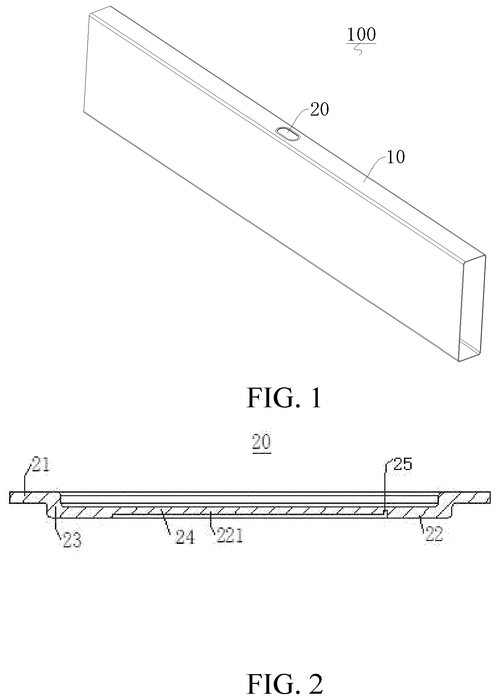

Embodiments of the present disclosure will be described in detail below, and the embodiments described with reference to the accompanying drawings are illustrative. A battery 100 according to an embodiment in a first aspect of the present disclosure will be described below with reference to FIGs. 1 to 12.

As shown in FIGs. 1 to 12, the battery 100 according to the embodiment in the first aspect of the present disclosure includes a battery shell 10 and an explosion-proof valve 20.

Specifically, the battery 100 has a volume of V, where V is in $mm^3$. The explosion-proof valve 20 is provided with a scored groove 25, and the explosion-proof valve 20 has an open-up region 24. In a depth direction of the scored groove 25 (that is, a direction from a groove top to a groove bottom of the scored groove 25, an outer edge of an orthographic projection of the open-up region 24 is a predetermined open-up boundary. The orthographic projection of the open-up region 24 has an area S, and S is in $mm^2$. S and V meet $0.3 \text{ mm}^{-1} \leq (5000 \times S)/V$. In the above formula, the area S of the orthographic projection of the open-up region 24 is expressed in square millimeter, and the volume V of the battery 100 is expressed in cubic millimeter. When a pressure inside the battery 100 is too high, a gas inside the battery 100 can be smoothly released from the open-up region 24 of the explosion-proof valve 20, to ensure the safe use of the battery 100. Therefore, by controlling a ratio of the area S of the orthographic projection of the open-up region 24 to the volume V of the battery 100 to fall within a suitable range, a pressure relief rate of the battery 100 can be effectively improved, and the pressure inside the battery 100 can be relieved from the open-up region 24 of the explosion-proof valve 20 timely and quickly, thus improving the protection for the battery 100; and also, the explosion-proof valve 20 has a high structural strength, which can ensure the safe use of the battery 100.

According to the battery 100 in accordance with the embodiment of the present disclosure, by controlling the ratio of the area S of the orthographic projection of the open-up region 24 to the volume V of the battery 100, the pressure relief rate of the battery 100 can be effectively improved, and the pressure inside the battery 100 can be relieved timely and quickly, thus improving the protection for the battery 100. Additionally, the explosion-proof valve 20 has a high structural strength, which can ensure the safe use of the battery 100.

According to some embodiments of the present disclosure, S and V meet 5000 X S/V≤6mm$^{-1}$. Therefore, by controlling the ratio of the area S of the orthographic projection of the open-up region 24 to the volume V of the battery 100 to fall within a suitable range, the pressure relief rate of the battery 100 can be effectively improved, and the pressure inside the battery 100 can be relieved timely and quickly, thus improving the protection for the battery 100; and also, the explosion-proof valve 20 has a high structural strength, to ensure the safe use of the battery 100.

According to some embodiments of the present disclosure, when a positive electrode material of the battery 100 is a compound with an olivine-type structure, S and V further meet: 0.3 mm$^{-1}$≤5000 X SN≤5 mm$^{-1}$. Through such an arrangement, the battery 100 can have excellent electrochemical performance, for example, the battery 100 has a high capacity, by using a compound with an olivine-type structure as the positive electrode material of the battery 100. If the S/V ratio multiplying 5000 is less than 0.3 mm$^{-1}$, the open-up region 24 has a small area, potentially causing the failure to meet the demand of discharging the gas inside the battery 100 in time. If the S/V ratio multiplying 5000 is greater than 5 mm$^{-1}$, the open-up region 24 has a large area, which may reduce the structural strength of the explosion-proof valve 20, affecting the safe use of the battery 100. Therefore, by setting S and V to meet 0.3mm$^{-1}$≤5000 X S/N≤5mm$^{-1}$, the ratio of the open-up region 24 to the volume of the battery 100 is appropriate, so that while the battery 100 has excellent electrochemical performance, the pressure inside the battery 100 can be ensured to be relieved timely and quickly, thus effecting improving the safety performance of the battery 100. The compound with an olivine-type structure may be, but is not limited to, lithium iron phosphate lithium manganese iron phosphate, or a mixture of lithium iron phosphate and lithium manganese iron phosphate.

According to some other embodiments of the present disclosure, when the positive electrode material of the battery 100 contains a layered compound, S and V further meet: 0.5 mm$^{-1}$≤5000 X S/V≤6 mm$^{-1}$. The layered lithium nickel-cobalt-manganese oxide ternary material has a high activity. By using a highly active material such as the layered lithium nickel-cobalt-manganese oxide ternary material, a combination of lithium iron phosphate and the layered lithium nickel-cobalt-manganese oxide ternary material, or a combination of lithium manganese iron and the layered lithium nickel-cobalt-manganese oxide ternary material as the positive electrode material as the battery 100, the proportion of active material in the battery 100 is relatively large, so that the energy of the battery 100 is greater, and the electrochemical performance of the battery 100 is better, for example, the battery 100 has a higher capacity. Therefore, the battery 100 has a higher requirement for the pressure relief rate of the explosion-proof valve 20. If the S/V ratio multiplying 5000 is less than 0.5 mm$^{-1}$, the open-up region 24 has a small area, potentially causing the failure to meet the demand of discharging the gas inside the battery 100 as quick as possible. If the S/V ratio multiplying 5000 is greater than 6 mm$^{-1}$, the open-up region 24 has a large area, which reduces the safety performance of the battery 100. Therefore, by setting S and V to meet 0.5mm$^{-1}$≤5000 X S/V≤6mm$^{-1}$, the ratio of the open-up region 24 to the volume of the battery 100 is appropriate, so that while the battery 100 has excellent charging and discharging performance, the pressure inside the battery 100 can be ensured to be relieved timely and quickly, to ensure the safe use of the battery 100.

Hereinafter, description is made with reference to Comparative Embodiments 1 to 2 (that is, the related art) and Embodiments 1 to 12 (that is, embodiments of the present disclosure). The batteries 100 in Comparative Embodiments 1-2 and the batteries 100 in Embodiments 1-12 are tested by the method specified in GB/T 31485-2015, and curves of the pressure relief rates of the corresponding batteries 100 are recorded. The batteries in the related art are basically the same as the batteries 100 in the embodiments of the present disclosure, except that the values of S and V are different.

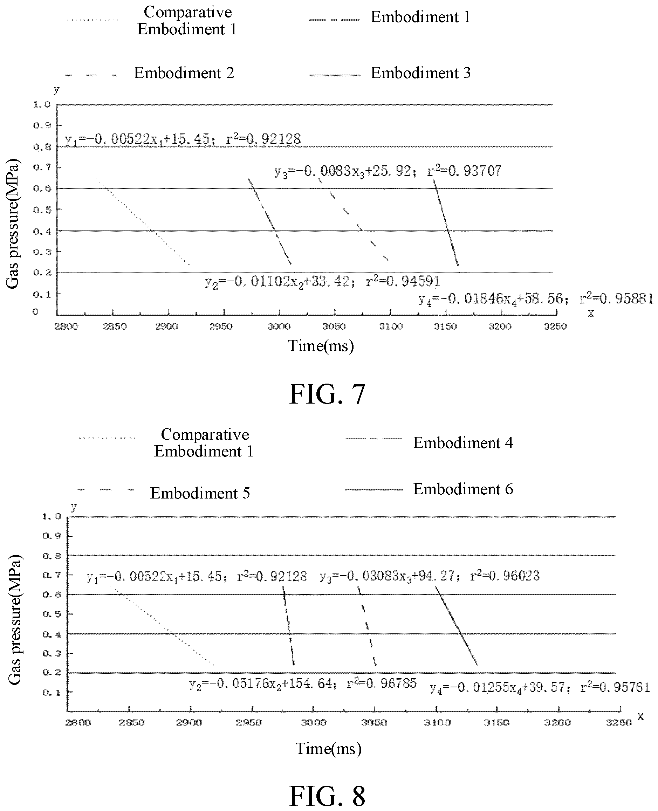

When the positive electrode material of the battery 100 is lithium iron phosphate, the area S of the open-up region 24 of the battery and the volume V of the battery 100 in Comparative Embodiment 1, and the area S of the orthographic projection of the open-up region 24 of the battery 100 and the volume V of the battery 100 in Embodiments 1-6 are selected from Table 1 below. The test results of the pressure release rate are shown in FIGs. 7 and 8.

Table 1

| No. | S (lithium iron) | V | 5000 X S/V |
|---|---|---|---|
| Embodiment 1 | 80 | 400000 | 1 |
| Embodiment 2 | 150 | 1800000 | 0.416666667 |
| Embodiment 3 | 500 | 700000 | 3.571428571 |
| Embodiment 4 | 800 | 800000 | 5 |
| Embodiment 5 | 1300 | 1500000 | 4.333333333 |
| Embodiment 6 | 1600 | 3500000 | 2.285714286 |
| Comparative Embodiment 1 | 150 | 3300000 | 0.227272727 |

Referring to Table 1, FIGs. 7 and 8, FIG. 7 is a curve showing the change of gas pressure inside a battery in Embodiments 1 to 3 and Comparative Embodiment 1 when an elevated pressure inside the battery is relieved; and FIG. 8 is a curve showing the change of gas pressure inside a battery in Embodiments 4 to 6 and Comparative Embodiment 1 when an elevated pressure inside the battery is relieved. It can be seen from the curves that the gas pressure drop of the battery 100 in Embodiments 1 to 6 per unit time is greater than that of the battery 100 in Comparative Embodiment 1.

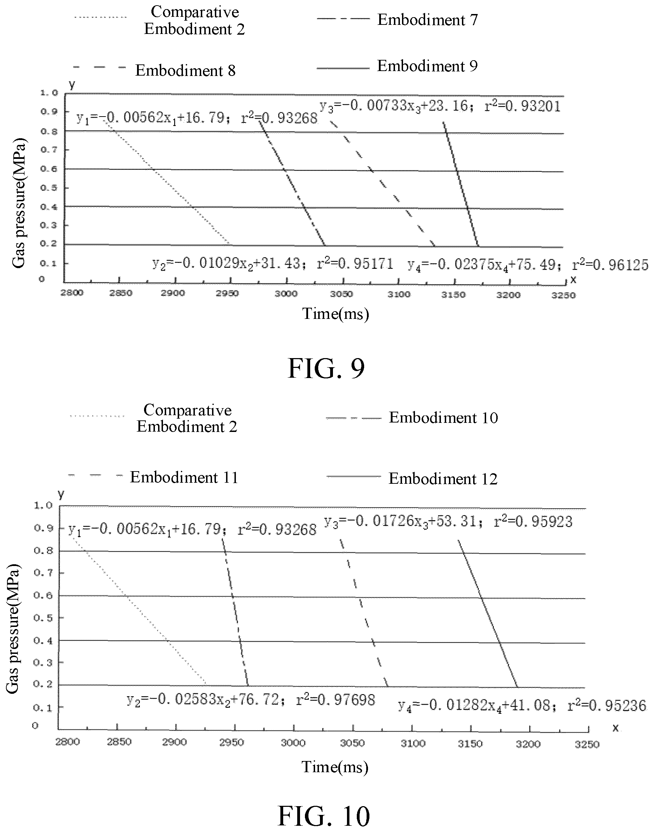

When the positive electrode material of the battery 100 is the layered lithium nickel-cobalt-manganese oxide ternary material. The area S of the orthographic projection of the open-up region 24 of the battery 100 the volume V of the battery 100 in Comparative Embodiment 2, and the area S of the orthographic projection of the open-up region 24 of the battery 100 and the volume V of the battery 100 in Embodiments 7-12 are selected from Table 2 below. The test results of the pressure release rate are shown in FIGs. 9 and 10.

Table 2

| No. | S (ternary) | V | 5000 X S/V |
|---|---|---|---|
| Embodiment 7 | 80 | 400000 | 1 |
| Embodiment 8 | 150 | 100 | 1.5 |
| Embodiment 9 | 500 | 600000 | 4.166666667 |
| Embodiment 10 | 800 | 700000 | 5.714285714 |
| Embodiment 11 | 1300 | 1800000 | 3.611111111 |
| Embodiment 12 | 1600 | 3500000 | 2.285714286 |
| Comparative Embodiment 2 | 150 | 2000000 | 0.375 |

Referring to Table 2, FIGs. 9 and 10, FIG. 9 is a curve showing the change of gas pressure inside a battery 100 in Embodiments 7 to 9 and Comparative Embodiment 2 when an elevated pressure inside the battery is relieved. FIG. 10 is a curve showing the change of gas pressure inside a battery 100 in Embodiments 10 to 12 and Comparative Embodiment 2 when an elevated pressure inside the battery is relieved. It can be seen from the curves that the gas pressure drop of the battery 100 in Embodiments 7 to 12 per unit time is greater than that of the battery 100 in Comparative Embodiment 1.

Therefore, as shown in Embodiments 1 to 12, the value range of 5000 X S/V claimed in the implementation of the present disclosure can effectively increase the area of the open-up region 10, improve the exhaust volume through the explosion-proof valve 20 in unit time, and enhance the safety performance of the battery 100 using the explosion-proof valve 20 of the present disclosure.

In some embodiments, S meet: $80 \text{ mm}^2 \leq S \leq 1600 \text{ mm}^2$. If the area of the orthographic projection of the open-up region 24 is less than $80 \text{ mm}^2$, the open-up region 24 has a small area, potentially causing the failure to meet the demand of discharging the gas inside the battery 100 as quick as possible. If the area of the orthographic projection of the open-up region 24 is greater than $1600 \text{ mm}^2$, the open-up region 24 has a large area, which may reduce the structural strength of the explosion-proof valve 20.

In some embodiments, V meets $40000 \text{ mm}^3 \leq V \leq 3500000 \text{ mm}^3$. If the volume of the battery 100 is less than $40000 \text{ mm}^3$, the volume of the battery 100 is small and the chemical performance of the battery 100 is poor. If the volume of the battery 100 is greater than $3500000 \text{ mm}^3$, the volume of the battery 100 is large, which may reduce the structural strength of the explosion-proof valve 20, causing reduced safety performance of the battery 100.

Therefore, S and V are set to respectively meet: $80 \text{ mm}^2 \leq S \leq 1600 \text{ mm}^2$ and $40000 \text{ mm}^3 \leq V \leq 3500000 \text{ mm}^3$. Therefore, the open-up region 24 has an appropriate area, which improves the pressure relief rate of the explosion-proof valve 20 while the structural strength of the explosion-proof valve 20 is ensured. In addition, the battery 100 has an appropriate volume, so that while the battery 100 has excellent charging and discharging performance, the elevated pressure inside the battery 100 can be ensured to be relieved timely and quickly, to ensure the safe use of the battery 100.

According to some embodiments of the present disclosure, the scored groove 25 is a C-shaped scored groove or a two-Y-shaped scored groove. The pattern of the scored groove 25 is not limited to the above shape, and any shape of scored groove 25 can be used. The scored groove 25 can be designed to meet different usage occasions as required.

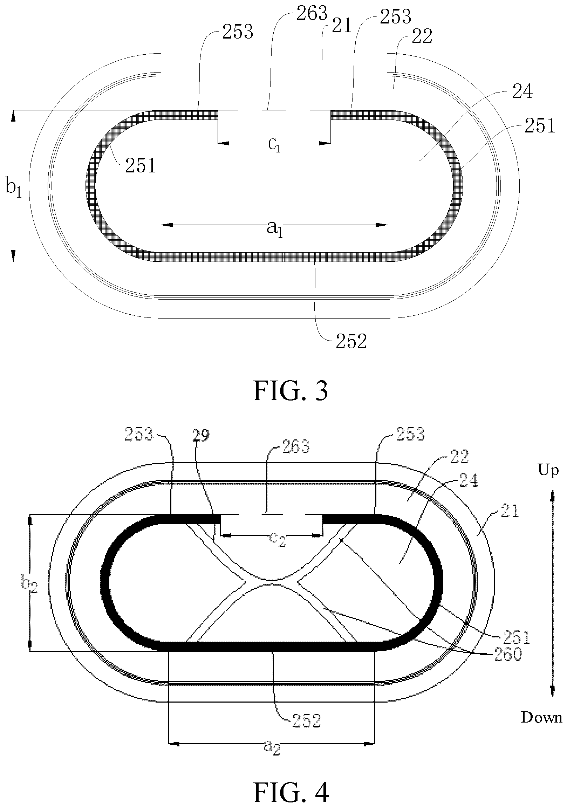

According to some specific embodiments of the present disclosure, referring to FIGs. 3 and 4, the scored groove 25 is a C-shaped scored groove. The scored groove 25 includes two oppositely arranged first arc segments 251, a first straight-line segment 252 and two second straight-line segments 253 arranged spaced apart. The first straight-line segment 252 is arranged parallel to the second straight-line segments 253, and two ends of the first straight-line segment 252 are respectively connected to the two first arc segments 251. Each second straight-line segment 253 is connected to a corresponding first arc segment 251. In other words, the first straight-line segment 252 connects one ends of the two first arc segments 251, the other ends of the two first arc segments 251 are respectively connected with one second straight-line segment 253, and the two second straight-line segments 253 are arranged spaced apart. In a depth direction of the scored groove 25, two free ends of an outer edge of an orthogonal projection of the scored groove 25 are connected to form a connecting line 263. That is, a connecting line between edges of the two second straight-line segments 253 at a side away from the center of the explosion-proof valve is the connecting line 263. The connecting line 263 and the outer edge of the orthogonal projection of the scored groove 25 jointly form a predetermined open-up boundary. In this case, an area of a region delimited by the predetermined open-up boundary (that is, an area of the orthographic projection of the open-up region 24 in the depth direction of the scored groove 25) is $S_c$, and $S_c = a_1 \times b_1 + \pi \times b_1^2/4$; and a total length of the scored groove 25 is $L_c$, and $L_c = 2a_1 - c_1 + \pi b_1$, where $a_1$ represents a length of the first straight-line segment 252, $b_1$ represents a distance between an outer side of the first straight-line segment 252 and an outer side of the second straight-line segment 253, and $c_1$ represents a distance between the two second straight-line segments 253, that is, a length of the connecting line 263.

Further, a cross section of the scored groove 25 may be of a rectangle or inverted trapezoid shape. The "cross section" here is a plane parallel to the depth direction of scored groove 25. When the cross section of the scored groove 25 is of an inverted trapezoid shape, a width of the scored groove 25 gradually decreases towards a groove bottom of the scored groove 25. In this case, $a_1$ can be understood as a length of an outer edge of the first straight-line segment 252 at a groove top or an opening, and $b_1$ can be understood as a diameter of an outer edge of the first arc segment 251 at the groove top or opening. In other words, in the depth direction of the scored groove 25 (that is, a direction from a groove opening to the groove bottom of the scored groove 25, the outer edge of the orthographic projection of the scored groove 25 includes two opposite semicircles, $b_1$ can be understood as a diameter of the semicircle, and $a_1$ can be understood as a distance between centers of the two semicircles.

In some embodiments, as shown in FIG. 4, the scored groove 25 is a C-shaped scored groove. The open-up region 24 is further arranged with a first reinforcing groove 29 having a structure reinforcing effect. The first reinforcing groove 29 is X-shaped. The first reinforcing groove 29 includes two fourth arc segments 260. The two fourth arc segments 260 are symmetrically arranged in the width direction of the explosion-proof valve (for example, an up-down direction in FIG. 4), and the vertexes of the two fourth arc segments 260 coincide. Two ends of one fourth arc segment 260 extend to and abut against the second straight-line segment 253, and two ends of the other fourth arc segment 260 respectively extend to and abut against the first straight-line segment 252. In the depth direction of the scored groove 25, the depth of the first reinforcing groove 29 is smaller than depth of the scored groove 25. In this case, the area of the region delimited by the predetermined open-up boundary (that is, the area of the orthographic projection of the open-up region 24 in the depth direction of the scored groove 25) is $S_x$ and $S_x = S_c = a_2 \times b_2 + \pi \times b_2^2/4$; and the total length of the scored groove 25 is $L_x$ and $Lx = L_c = 2a_2 - c_2 + \pi b_2$, where $a_2$ represents a length of the first straight-line segment 252, $b_2$ represents a distance between an outer side of the first straight-line segment 252 and an outer side of the second straight-line segment 253, and $c_2$ represents a distance between the two second straight-line segments 253.

Further, a cross section of the scored groove 25 may be of a rectangle or inverted trapezoid shape. The "cross section" here is a plane parallel to the depth direction of scored groove 25. When the cross section of the scored groove 25 is of an inverted trapezoid shape, a width of the scored groove 25 gradually decreases towards a groove bottom of the scored groove 25. In this case, $a_2$ can be understood as a length of an outer edge of the first straight-line segment 252 at a groove top or an opening, and $b_2$ can be understood as a diameter of an outer edge of the first arc segment 251 at the groove top or opening. In other words, in the depth direction of the scored groove 25 (that is, a direction from a groove opening to the groove bottom of the scored groove 25, the outer edge of the orthographic projection of the scored groove 25 includes two opposite semicircles, $b_2$ can be understood as a diameter of the semicircle, and $a_2$ can be understood as a distance between centers of the two semicircles.

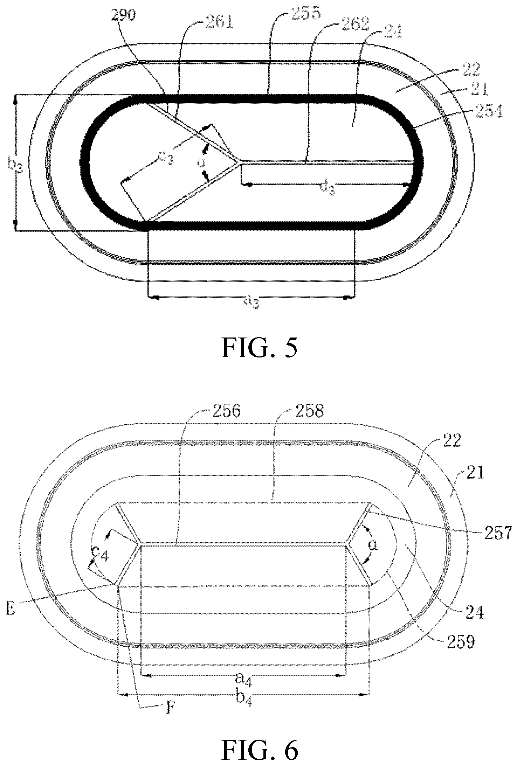

According to some specific embodiments of the present disclosure, as shown in FIG. 5, the scored groove 25 is a looped scored groove. The open-up region 24 is further arranged with a second reinforcing groove 290 having a structure reinforcing effect. The second reinforcing groove 290 is Y-shaped. The second reinforcing groove 290 is located inside and connected to the looped scored groove. For example, the looped scored groove includes two oppositely arranged second arc segments 254 and two parallelly arranged third straight-line segments 255. Two ends of each third straight-line segment 255 are respectively connected to the two first arc segments 254. The two third straight segments 255 and the two second arc segments 254 form a closed loop structure. In the depth direction of the scored groove 25, the outer edge of the orthogonal projection of the scored groove 25 form a predetermined open-up boundary. The predetermined open-up boundary can be formed by edges of the two third straight-line segments 255 and the two second arc segments 254 at a side away from the center of the explosion-proof valve.

The second reinforcing groove 290 includes two eighth straight-line segments 261 and one ninth straight-line segment 262. One end of each of the two eighth straight-line segments 261 is connected to the ninth straight-line segment 262, an included angle $\alpha$ is formed between the two eighth straight-line segments 261, and the other ends of the two eighth straight-line segments 261 are respectively connected to one third straight-line segment 255. The other end of the ninth straight-line segment 262 may be connected to the second arc segment 254. A corresponding thickness of the second reinforcing groove 290 in the open-up region 24 may be less than a corresponding thickness of the looped scored groove.

That is, the depth of the second reinforcing groove 290 is smaller than depth of the scored groove. Through such an arrangement, when the pressure inside the battery 100 increases, the open-up region 24 protrudes outward under the internal pressure of the battery 100. The second reinforcing groove 290 deforms to resist the deformation of the open-up region 24, thereby increasing the structural strength and deformation resistance of the open-up region 24 and effectively avoiding the improper opening of the explosion-proof valve 20. In this case, the area of the region delimited by the predetermined open-up boundary (that is, the area of the orthographic projection of the open-up region 24 in the depth direction of the scored groove 25) is $S_y$, and $S_y = a_3 \times b_3 + \pi \times b_3^2/4$; and the total length of the scored groove 25 is $L_y$, and $L_y = 2c_3 + d_3$, where $a_3$ is a length of the third straight-line segment 255, $b_3$ is a distance between an outer side of the two third straight-line segments 255, $c_3$ is a length of the eighth straight-line segment 261, and $d_3$ is a length of the ninth straight-line segment 262.

Further, a cross section of the scored groove 25 may be of a rectangle or inverted trapezoid shape. The "cross section" here is a plane parallel to the depth direction of scored groove 25. When the cross section of the scored groove 25 is of an inverted trapezoid shape, a width of the scored groove 25 gradually decreases towards a groove bottom of the scored groove 25. In this case, $a_3$ can be understood as a length of an outer edge of the third straight-line segment 255 at a groove top or an opening, and $b_3$ can be understood as a diameter of an outer edge of the second arc segment 254 at the groove top or opening. In other words, in the depth direction of the scored groove 25 (that is, a direction from a groove opening to the groove bottom of the scored groove 25, the outer edge of the orthographic projection of the scored groove 25 includes two opposite semicircles, $b_3$ can be understood as a diameter of the semicircle, and $a_3$ can be understood as a distance between centers of the two semicircles.

According to some specific embodiments of the present disclosure, referring to FIG. 6, the scored groove 25 is a two-Y-shaped scored groove. when the pressure inside the battery 100 increases and needs to be relieved, the internal pressure can be relieved from the two-Y-shaped scored groove, so that the open-up region 24 can be turned over to realize pressure relief. For example, the two-Y-shaped scored groove includes a fourth straight-line segment 256 and four fifth straight-line segment 257. Two ends of the fourth straight-line segment 256 are respectively connected with two fifth straight-line segments 257 arranged at a preset included angle. In the depth direction of the scored groove 25, an arc-shaped segment 259 is defined between free ends of orthographic projections of two fifth straight-line segments 257 located at the same end of the fourth straight-line segment 256. The arc-shaped segment 259 has a vertex of the preset included angle between the two fifth straight-line segments 257 as a center of a circle. A sixth straight-line segment 258 is defined between free ends of orthographic projections of two fifth straight-line segments 257 located at the same side of the fourth straight-line segment 256. The two arc-shaped segments 259 and the two sixth straight-line segments 258 jointly form a predetermined open-up boundary. It is to be understood that since the width of the fourth straight-line segment 256 and the fifth straight-line segments 257 is relatively small and negligible, the arc-shaped segment 259 and the sixth straight-line segment 258 approximately intersect at one point. The arc-shaped segment 259 can be understood as being defined by free ends at sides close to each other of the orthographic projections of the two fifth straight-line segments 257 at the same end of the fourth straight-line segment 256. The sixth straight-line segments 258 can be understood as being defined by free ends at sides close to each other of the orthographic projections of the two fifth straight-line segments 257 at the same side of the fourth straight-line segment 256.

In this case, an area of a region delimited by the predetermined open-up boundary (that is, an area of the orthographic projection of the open-up region 24 in the depth direction of the scored groove 25) is

$$S_{\text{two-y}}, S_{\text{two-y}} = = \frac{(a_4 + b_4) \times c_4\sqrt{2(1 - \cos\alpha)}}{2} + \frac{\pi c_4^2 \alpha}{180}$$

, and the total length of the scored groove 25 is $L_{\text{two-y}} = a_4 + 4c_4$. "Free ends E" of the two fifth straight-line segments 257 located at the same end of the fourth straight-line segment 256 refer to endpoints at sides close to each other of the two fifth straight-line segments 257 located at the same end of the fourth straight-line segment 256. "Free ends F" of the two fifth straight-line segments 257 located at two ends of the fourth straight-line segment 256 and at the same side of the fourth straight-line segment 256 refer to endpoints at sides close to each other of the two fifth straight-line segments 257 located at two ends of the fourth straight-line segment 256 and at the same side of the fourth straight-line segment 256. $a_4$ is a length of the fourth straight-line segment 256, $b_4$ is a distance between the free ends F of the two fifth straight-line segments 257 located at the same side of the fourth straight-line segment 256, and $c_4$ is a length of the fifth straight-line segment 257.

Therefore, the structural strength of the open-up region 24 can by changed by different shapes of scored grooves 25. An appropriate scored groove 25 can be selected according to a different design standard, thus reducing the process difficulty of the explosion-proof valve 20, improving the pressure relief rate of the explosion-proof valve 20, and improving the safety performance of the battery 100.

Further, a cross section of the scored groove 25 may be of a rectangle or inverted trapezoid shape. The "cross section" here is a plane parallel to the depth direction of scored groove 25. When the cross section of the scored groove 25 is of an inverted trapezoid shape, a width of the scored groove 25 gradually decreases towards a groove bottom of the scored groove 25. In this case, $a_4$ can be understood as a length of an outer edge of the fourth straight-line segment 256 at a groove top or an opening, $b_4$ is a distance between the free ends F of the two fifth straight-line segments 257 located at the same side of the fourth straight-line segment 256 at the groove top or opening, and $c_4$ is a length of an outer edge of the fifth straight-line segment 257 at the groove top or opening.

According to some specific embodiments of the present disclosure, as shown in FIG. 2, the explosion-proof valve 20 includes a connecting segment 21, a supporting segment 22, and a buffering segment 23. The explosion-proof valve 20 is connected to the battery shell 10 by the connecting segment 21. The connecting segment 21 is connected to an outer peripheral side of the supporting segment 22, and the supporting segment 22 and the connecting segment 21 are arranged spaced apart along the thickness direction of the supporting segment 22. The buffering segment 23 is connected between the connecting segment 21 and the supporting segment 22, and the open-up region 24 is arranged on the supporting segment 22. Therefore, by the connecting segment 21, the explosion-proof valve 20 can be fixedly connected to the battery shell 10, and the supporting segment 22 can enhance the structural strength of the open-up region 24, to avoid the twisted deformation of the open-up region 24 by an external force. In addition, by arranging the buffering segment 23 between the connecting segment 21 and the supporting segment 22, the buffering segment 23 can adsorb the thermal stress generated when the open-up region 24 is welded to the supporting segment 22, so as to improve the reliability and safety of the explosion-proof valve 20.

Optionally, the supporting segment 22 is located at a side of the connecting segment 21 adjacent to a center of the battery shell 10, so that the explosion-proof valve 20 is generally recessed toward the interior of the battery 100. This can effectively avoid the improper opening of the open-up region 24 caused by the impact of the open-up region 24 by an external force.

According to some specific embodiments of the present disclosure, as shown in FIG. 2, a recess 221 is formed on the supporting segment 22, and the scored groove 25 is formed on a bottom wall of the recess 221. Therefore, the supporting segment 22 can further provide protection for the open-up region 24. Meanwhile, the open-up region 24 is thinned, to promote the successful opening of the open-up region 24 when the pressure inside the explosion-proof valve 20 increases and needs to be relieved, and thus avoid the failure of the explosion-proof valve 20.

Additionally, in the depth direction of the scored groove 25, the thickness of the open-up region 24 may vary. For example, the thickness of an intermediate area of the open-up region 24 is smaller than that at an edge. This ensures the strength of connection of the open-up region 24 to the supporting segment 22 and reduces the production cost of the open-up region 24.

According to some specific embodiments of the present disclosure, in the depth direction of the scored groove 25, an outer edge of an orthographic projection of the recess 221 has an overlapped area with the outer edge of the orthographic projection of the scored groove 25. That is, the scored groove 25 is provided at an outer edge of the bottom wall of the recess 221. As such, the area of the orthographic projection of the open-up region 24 is maximized, which improves the pressure relief capability of the explosion-proof valve 20.

According to some optional embodiments of the present disclosure, the explosion-proof valve 20 may have an oval shape or a racetrack-like shape. Through such an arrangement, the explosion-proof valve 20 can well fit to the battery shell 10, for example, it can well fit to the shape of a cover plate of the battery shell 10. When the used explosion-proof valve 20 has an oval shape or a racetrack-like shape, the exhaust volume through the explosion-proof valve 20 in unit time is larger, and the pressure relief rate is better.

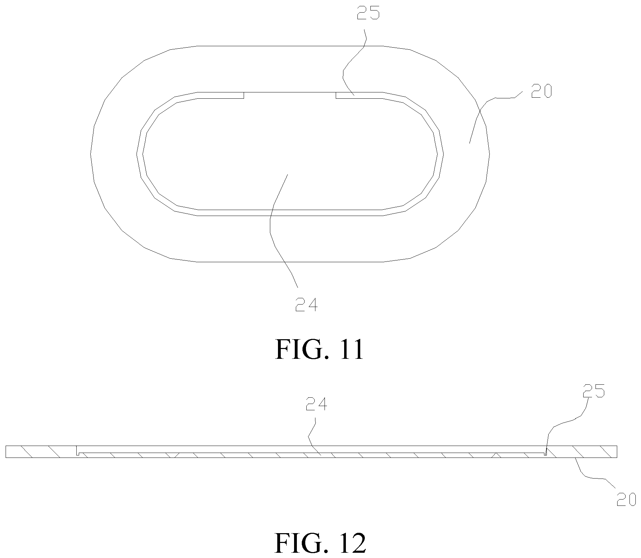

As shown in Figs. 11-12, according to some embodiments of the present disclosure, the explosion-proof valve 20 has a flat sheet-like structure. The recess 221 is formed on the flat sheet-like structure, and the scored groove 25 is provided at an outer edge of a bottom wall of the recess 221. Through such an arrangement, when the pressure inside the battery 100 increases and needs to be relieved, the explosion-proof valve 20 with the flat sheet-like structure tends to deform, and the gas inside the battery 100 can be relieved along the open-up region 24 defined along the scored groove 25, so it can well fit to the battery shell 10 to achieve rapid pressure relief.

Optionally, an energy density of the battery 100 is ED, where ED meets 200 wh/kg≤ED≤280 wh/kg. Through such an arrangement, the energy density of the battery 100 is large, and the battery 100 has more active material or more highly active material therein. Therefore, while the battery 100 has better electrochemical performance, the exhaust volume through the explosion-proof valve 20 in the battery 100 needs to be designed more accurately, to ensure that the explosion-proof valve 20 can be opened timely under extreme conditions, and to avoid the improper opening of the explosion-proof valve 20.

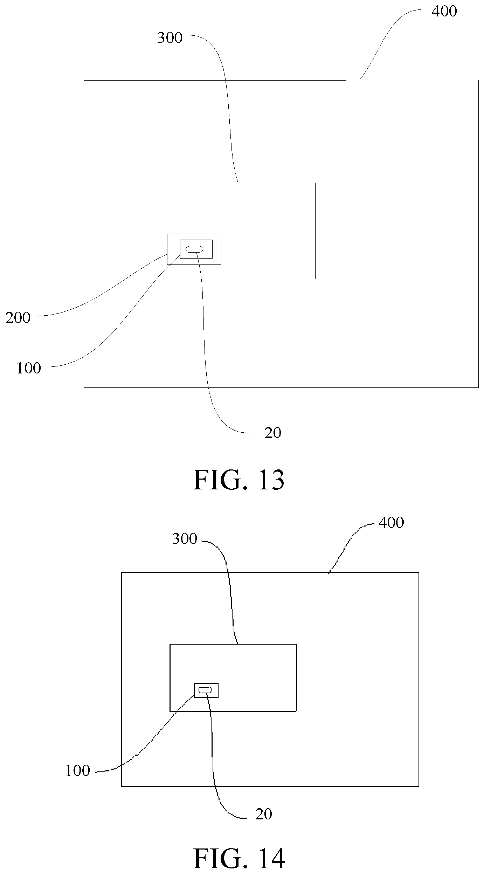

Referring to FIGs. 13 and 14, a battery module 200 according to an embodiment in a second aspect of the present disclosure includes the battery 100 according to the embodiment in the first aspect. The battery module 200 includes multiple batteries 100 arranged side by side. The multiple batteries 100 are connected in series or in parallel. In the descriptions of the present disclosure, "multiple" means two or more. Therefore, by using the battery 100 as described above in the battery module 200, the safety performance of the battery module 200 can be improved. The battery module 200 may further include two end plates (not shown) and two side plates (not shown). The two end plates are distributed at two ends of the multiple batteries 100 along a first direction, and the two side plates are distributed at two sides of the multiple batteries 100 along a second direction. The end plate and the side plate are connected to fix the batteries 100, and the first direction is perpendicular to the second direction. Definitely, in other embodiments, the battery module 200 may further include two end plates and a strap (not shown). The two end plates are distributed at two ends of the multiple batteries 100 and fixed by the strap.

According to the battery module 200 in according with the embodiment of the present disclosure, the battery module 200 has high safety performance and long service life.

Referring to FIGs. 13 and 14, a battery pack 300 according to an embodiment in a third aspect of the present disclosure includes the battery 100 according to the embodiment in the first aspect of the present disclosure, or the battery module 200 according to the embodiment in the second aspect of the present disclosure. The battery pack 300 includes a tray (not shown). The battery 100 or the battery module 200 are fixed in the tray, and the tray is configured to fix the battery pack 300 onto a vehicle 400. The battery 100 according to the above embodiment can be directly arranged in the tray, or the battery module 200 according to the above embodiment is fixed in the tray.

According to the battery pack 300 in accordance with the embodiment of the present disclosure, the explosion-proof valve 20 of the battery 100 in the battery module 200 can be arranged close to a bottom of the battery module 200, such that during pressure relief of the battery 100 under heat, a gas flow can be prevented from rushing to the interior of the vehicle body, to avoid the secondary hazards. Therefore, the stability is improved when the battery pack 300 is used.

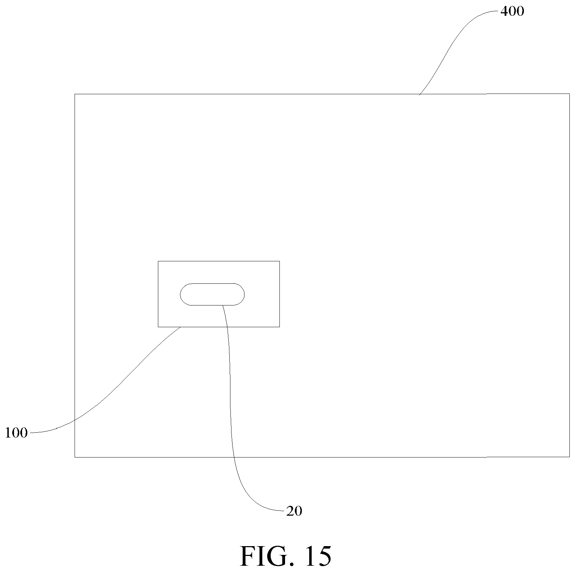

Referring to FIGs. 13-15, a vehicle 400 according to an embodiment in a fourth aspect of the present disclosure includes the battery 100 according to the embodiment in the first aspect described above or includes the battery pack 300 according to the embodiment in the third aspect of the present disclosure, Therefore, the possibility of explosion and combustion of the vehicle 400 is reduced, thereby improving the safety performance of the vehicle 400. For example, in some embodiments, the battery 100 may be directly mounted on the vehicle 400. In some other embodiments, the battery 100 is assembled into a battery pack 300, and the battery pack 300 is mounted on the vehicle 400.

In the description of the specification, the description with reference to the terms "an embodiment", "some embodiments", "exemplary embodiments", "example", "specific example", or "some examples" and so on means that a specific feature, structure, materials or characteristics described in connection with the embodiment or example are embraced in at least one embodiment or example of the present disclosure. In the specification, exemplary descriptions of the foregoing terms do not necessarily refer to the same embodiment or example.

In the descriptions of the present disclosure, the "first feature" and "second feature" may include one or more features. In the descriptions of the present disclosure, "multiple" means two or more. In the descriptions of the present disclosure, a first feature being "on" or "under" a second feature may include that the first and second features are in direct contact, or may include that the first and second features are not in direct contact but in contact with the aid of other features therebetween. In the descriptions of the present disclosure, a first feature being "on", "above" or "over" a second feature includes that the first feature is right above or obliquely above the first feature, or merely indicates that a level of the first feature is higher than that of the second feature.

Although the embodiments of the present disclosure have been shown and described, a person of ordinary skill in the art should understand that various changes, modifications, replacements and variations can be made to the embodiments without departing from the principles and spirit of the present disclosure, and the scope of the present disclosure is as defined by the appended claims and their equivalents.

## Claims

1. A battery (100), comprising:

   a battery shell (10);
   an explosion-proof valve (20), the explosion-proof valve (20) being arranged on the battery shell (10), the battery (100) having a volume of V, in $mm^3$, the explosion-proof valve (20) being provided with a scored groove (25), the explosion-proof valve (20) having an open-up region (24), in a depth direction of the scored groove (25), an outer edge of an orthographic projection of the open-up region (24) being a predetermined open-up boundary, and an area of an orthographic projection of the open-up region (24) being S, in $mm^2$, wherein S and V meet 0.3 $mm^{-1} \leq (5000 \times S)/V$.

2. The battery (100) according to claim 1, wherein S and V meet $(5000 \times S)/V \leq 6$ $mm^{-1}$.

3. The battery (100) according to claim 1 or 2, wherein when a positive electrode material of the battery (100) is a compound with an olivine-type structure, S and V further meet: $0.3 mm^{-1} \leq (5000 \times S)/V \leq 5 mm^{-1}$;
   when the positive electrode material of the battery (100) comprises a layered compound, S and V further meet: $0.5 mm^{-1} \leq (5000 \times S)/V \leq 6 mm^{-1}$.

4. The battery (100) according to any one of claims 1 to 3, wherein S meets: 80 mm$^2 \leq$S$\leq$1600 mm$^2$.

5. The battery (100) according to any one of claims 1 to 4, wherein V meets: 40000 mm$^3 \leq$V$\leq$3500000 mm$^3$.

6. The battery (100) according to any one of claims 1 to 5, wherein the scored groove (25) comprises two oppositely arranged first arc segments (251), a first straight-line segment (252) and two second straight-line segments (253) arranged spaced apart, the first straight-line segment (252) is arranged parallel to the second straight-line segments (253), two ends of the first straight-line segment (252) are respectively connected to the two first arc segments (251), and each second straight-line segment (253) is connected to a corresponding first arc segment (251); and
in a depth direction of the scored groove (25), two free ends of an outer edge of an orthogonal projection of the scored groove (25) are connected to form a connecting line (263), and the connecting line (263) and the outer edge of the orthogonal projection of the scored groove (25) jointly form a predetermined open-up boundary.

7. The battery (100) according to claim 6, wherein a first reinforcing groove (29) is arranged on the open-up region (24), the first reinforcing groove (29) comprises two fourth arc segments (260), the two fourth arc segments (260) are symmetrically arranged along a width direction of the explosion-proof valve (20), vertexes of the two fourth arc segments (260) coincide, two ends of one fourth arc segment (260) extend to the second straight-line segment (253), and two ends of the other fourth arc segment (260) respectively extend to the first straight-line segment (252).

8. The battery (100) according to claim 7, wherein in the depth direction of the scored groove (25), the depth of the first reinforcing groove (29) is smaller than the depth of the scored groove (25).

9. The battery (100) according to any one of claims 1 to 5, wherein the scored groove (25) comprises two oppositely arranged second arc segments (254) and two parallelly arranged third straight-line segments (255), two ends of each third straight-line segment (255) are respectively connected to the two first arc segments (254), and the two third straight segments (255) and the two second arc segments (254) form a closed loop structure; and
in the depth direction of the scored groove (25), the outer edge of the orthogonal projection of the scored groove (25) form the predetermined open-up boundary.

10. The battery (100) according to claim 9, wherein a second reinforcing groove (290) is arranged on the open-up region (24) , the second reinforcing groove (290) comprises two eighth straight-line segments (261) and one ninth straight-line segment (262), one end of each of the two eighth straight-line segments (261) is connected to the ninth straight-line segment (262), an included angle is formed between the two eighth straight-line segments (261), the other ends of the two eighth straight-line segments (261) extend to the two third straight-line segments (255) respectively, and the other end of the ninth straight-line segment (262) is connected to the second arc segment (254).

11. The battery (100) according to any one of claims 1 to 5, wherein the scored groove (25) comprises a fourth straight-line segment (256) and four fifth straight-line segments (257), two ends of the fourth straight-line segment (256) are respectively connected to two fifth straight-line segments (257) arranged at a preset included angle; and
in the depth direction of the scored groove (25), an arc-shaped segment (259) is defined between free ends of orthographic projections of two fifth straight-line segments (257) located at the same end of the fourth straight-line segment (256), the arc-shaped segment (259) has a vertex of the preset included angle as a center of a circle, a sixth straight-line segment (258) is defined between free ends of orthographic projections of two fifth straight-line segments (257) located at the same side of the fourth straight-line segment (256), and the two arc-shaped segments (259) and the two sixth straight-line segments (258) jointly form the predetermined open-up boundary.

12. The battery (100) according to any one of claims 1 to 11, wherein the explosion-proof valve (20) comprises a connecting segment (21), a supporting segment (22) and a buffering segment (23), the connecting segment (21) is connected to an outer peripheral side of the supporting segment (22), the supporting segment (22) and the connecting segment (21) are arranged spaced apart along the thickness direction of the supporting segment (22), the buffering segment (23) is connected between the connecting segment (21) and the supporting segment (22), and the open-up region (24) is arranged on the supporting segment (22).

13. The battery (100) according to any one of claims 1 to 12, wherein a recess is formed (221) on the explosion-proof valve (20), and the scored groove (25) is formed on a bottom wall of the recess (221).

14. The battery (100) according to claim 13, wherein in the depth direction of the scored groove (25), an outer edge of an orthographic projection of the recess (221) has an overlapped area with the outer edge of the orthographic projection of the scored groove (25).

15. The battery (100) according to any one of claims 1 to 14, wherein the explosion-proof valve (20) has an oval shape or a racetrack-like shape.

16. The battery (100) according to any one of claims 1 to 15, wherein the explosion-proof valve (20) has a flat sheet-like structure.

17. The battery (100) according to any one of claims 1 to 16, wherein an energy density of the battery (100) is ED, and ED meets 200wh/kg$\leq$ED$\leq$280wh/kg.

18. A battery module (200), comprising the battery (100) according to any one of claims 1 to 17.

19. A battery pack (300), comprising the battery (100) according to any one of claims 1 to 17 or the battery module (200) according to claim 18.

20. A vehicle (400), comprising the battery (100) according to any one of claims 1 to 17 or the battery pack (300) according to claim 19.

FIG. 1

FIG. 2

FIG. 3

FIG. 4

FIG. 5

FIG. 6

Comparative
Embodiment 1        — — —— Embodiment 1

— — —  Embodiment 2       ———— Embodiment 3

$y_1 = -0.00522x_1 + 15.45;\ r^2 = 0.92128$

$y_3 = -0.0083x_3 + 25.92;\ r^2 = 0.93707$

$y_2 = -0.01102x_2 + 33.42;\ r^2 = 0.94591$

$y_4 = -0.01846x_4 + 58.56;\ r^2 = 0.95881$

Time(ms)

**FIG. 7**

Comparative
Embodiment 1       — — — Embodiment 4

— — —  Embodiment 5      ———— Embodiment 6

$y_1 = -0.00522x_1 + 15.45;\ r^2 = 0.92128$  $y_3 = -0.03083x_3 + 94.27;\ r^2 = 0.96023$

$y_2 = -0.05176x_2 + 154.64;\ r^2 = 0.96785$  $y_4 = -0.01255x_4 + 39.57;\ r^2 = 0.95761$

Time(ms)

**FIG. 8**

FIG. 9

FIG. 10

25

20

24

FIG. 11

24

25

20

FIG. 12

FIG. 13

FIG. 14

FIG. 15

**INTERNATIONAL SEARCH REPORT**

| International application No. |
|---|
| **PCT/CN2023/093643** |

| | |
|---|---|
| **A.** | **CLASSIFICATION OF SUBJECT MATTER** |
| | H01M50/342(2021.01)i；　H01M50/249(2021.01)i |
| | According to International Patent Classification (IPC) or to both national classification and IPC |

| | |
|---|---|
| **B.** | **FIELDS SEARCHED** |

Minimum documentation searched (classification system followed by classification symbols)

　　IPC: H01M

Documentation searched other than minimum documentation to the extent that such documents are included in the fields searched

Electronic data base consulted during the international search (name of data base and, where practicable, search terms used)

　　CNABS; CNTXT; VEN; USTXT; EPTXT; WOTXT; CNKI: 电池, 防爆, 刻痕, 面积, 体积, battery, explosion-proof, nick, area, volume

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 114628845 A (BYD CO., LTD.) 14 June 2022 (2022-06-14)<br>description, paragraphs 26-66, and figures 1-12 | 1-20 |
| PX | CN 114628846 A (BYD CO., LTD.) 14 June 2022 (2022-06-14)<br>description, paragraphs 24-86, and figures 1-24 | 1-20 |
| PX | CN 216980795 U (BYD CO., LTD.) 15 July 2022 (2022-07-15)<br>description, paragraphs 50-103, and figures 1-13 | 1-20 |
| X | US 2016293926 A1 (SANYO ELECTRIC CO., LTD.) 06 October 2016 (2016-10-06)<br>description, paragraphs 18-20 and 43-91, and figures 1-14 | 1-6, 11, 15-20 |
| Y | US 2016293926 A1 (SANYO ELECTRIC CO., LTD.) 06 October 2016 (2016-10-06)<br>description, paragraphs 18-20 and 43-91, and figures 1-14 | 7-10, 12-14 |
| Y | CN 114122613 A (SUZHOU LEADING BAYESIAN NEW ENERGY SCIENCE AND TECHNOLOGY LIMITED COMPANY et al.) 01 March 2022 (2022-03-01)<br>description, paragraphs 24-59, and figures 1-4 | 6-8 |
| Y | CN 212461953 U (HUIZHOU BYD BATTERY CO., LTD.) 02 February 2021 (2021-02-02)<br>description, paragraphs 27-36, and figures 1-7 | 9-10 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 August 2023** | **23 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| | INTERNATIONAL SEARCH REPORT | International application No. |
| | | **PCT/CN2023/093643** |

**C.    DOCUMENTS CONSIDERED TO BE RELEVANT**

| Category* | Citation of document, with indication, where appropriate, of the relevant passages | Relevant to claim No. |
|---|---|---|
| Y | CN 201966267 U (DONGGUAN AMPEREX TECHNOLOGY LIMITED et al.) 07 September 2011 (2011-09-07) description, paragraphs 23-26, and figures 1-6 | 12-14 |
| X | JP H11273650 A (SHIN KOBE ELECTRIC MACHINERY CO., LTD.) 08 October 1999 (1999-10-08) description, paragraphs 5-13, and figures 1-2 | 1-5, 13-20 |
| Y | JP H11273650 A (SHIN KOBE ELECTRIC MACHINERY CO., LTD.) 08 October 1999 (1999-10-08) description, paragraphs 5-13, and figures 1-2 | 6-12 |
| Y | CN 207542310 U (JIANGSU TAFEL NEW ENERGY TECHNOLOGY CO., LTD. et al.) 26 June 2018 (2018-06-26) description, paragraphs 21-26, and figures 1-2 | 7, 8, 11 |
| Y | CN 107221624 A (SAMSUNG SDI CO., LTD.) 29 September 2017 (2017-09-29) description, paragraphs 33-68, and figures 1-6 | 12-14 |
| A | JP 2015008067 A (TOYOTA INDUSTRIES CORP.) 15 January 2015 (2015-01-15) entire document | 1-20 |

Form PCT/ISA/210 (second sheet) (July 2022)

**INTERNATIONAL SEARCH REPORT**
Information on patent family members

International application No.

**PCT/CN2023/093643**

| Patent document cited in search report | | | Publication date (day/month/year) | Patent family member(s) | | | Publication date (day/month/year) |
|---|---|---|---|---|---|---|---|
| CN | 114628845 | A | 14 June 2022 | CN | 114628845 | B | 09 September 2022 |
| CN | 114628846 | A | 14 June 2022 | CN | 114628846 | B | 09 September 2022 |
| CN | 216980795 | U | 15 July 2022 | None | | | |
| US | 2016293926 | A1 | 06 October 2016 | JP | 2016189248 | A | 04 November 2016 |
| | | | | JP | 6686286 | B2 | 22 April 2020 |
| CN | 114122613 | A | 01 March 2022 | CN | 217214995 | U | 16 August 2022 |
| CN | 212461953 | U | 02 February 2021 | None | | | |
| CN | 201966267 | U | 07 September 2011 | None | | | |
| JP | H11273650 | A | 08 October 1999 | None | | | |
| CN | 207542310 | U | 26 June 2018 | None | | | |
| CN | 107221624 | A | 29 September 2017 | EP | 3223333 | A1 | 27 September 2017 |
| | | | | EP | 3223333 | B1 | 01 April 2020 |
| | | | | US | 2017279098 | A1 | 28 September 2017 |
| | | | | US | 10658638 | B2 | 19 May 2020 |
| | | | | KR | 20170109919 | A | 10 October 2017 |
| | | | | CN | 107221624 | B | 23 November 2021 |
| JP | 2015008067 | A | 15 January 2015 | JP | 6044465 | B2 | 14 December 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210512534